# EUROPEAN PATENT SPECIFICATION

(11) **EP 2 583 884 B1**
(45) Date of publication and mention of the grant of the patent: **17.08.2016**
(21) Application number: 12185296.6
(22) Date of filing: 20.09.2012
(51) Int. Cl.: B62J 6/02, B62J 17/02, B62J 37/00, B62J 99/00

(54) **Front structure of saddle-ride type vehicle**
Vorderstruktur für ein Sattelfahrzeug
Structure avant de véhicule de type à enfourcher

(30) Priority: 20.10.2011 JP 2011230859
(43) Date of publication of application: 24.04.2013
(73) Proprietor: Honda Motor Co., Ltd., Tokyo 107-8556 (JP)
(72) Inventor: Ohashi, Hayato, Wako-Shi, Saitama 351-0193 (JP); Omae, Akira, Wako-shi, Saitama 351-0193 (JP)
(74) Representative: Stevens, Jason Paul

(56) References cited:
- EP-A1- 2 042 415
- EP-A1- 2 106 991
- EP-A1- 2 343 233
- WO-A1-2009/118997
- JP-U- 60 188 074

## Description

The present invention relates to a front structure of a saddle-ride type vehicle which includes headlights and an air introduction passage in a front portion of a vehicle body. More particularly, the invention relates to a structure where the air introduction passage is configured to introduce travelling winds toward the rear of the vehicle and is opened toward the front of the vehicle. WO 2009/118997 shows a front structure of a saddle-ride type vehicle according to the preamble of claim 1.

Japanese Patent Application Publication No. 2009-262914 discloses a motorcycle in which openings for lights are provided on a front cowl in a front portion of a vehicle body. A headlight and a position lamp are separately arranged in inner and outer positions within each opening for lights in a lateral direction of the vehicle. Multiple openings are provided on a cover for covering the opening for lights between the headlight and the position lamp, and a duct is provided for introducing travelling winds, which have been taken into the duct through each opening, toward the rear.

The headlight secures the amount of light by means of its large size in the radial direction and in the longitudinal (front-rear) direction. For this reason, the structure as disclosed in Japanese Patent Application Publication No. 2009-262914, in which the headlight and the duct are arranged in parallel, makes it difficult to use the travelling winds that flow through the air introduction passage within the duct for cooling the headlight.

The present invention has been made with the foregoing situation taken into consideration. An object of at least the preferred embodiments of the present invention is to provide a front structure of a saddle-ride type vehicle which enables headlights to be cooled by use of travelling winds passing through an air introduction passage.

According to a first aspect of the present invention, there is provided a front structure of a saddle-ride type vehicle provided with headlights and an air introduction passage in a front portion of a vehicle body, the air introduction passage being open to the front and configured to introduce travelling winds rearward, wherein the headlights using LEDs as their respective sources of light are located inside the air introduction passage and are supported by a duct which forms the air introduction passage; characterized in that the headlights are located inside the air introduction passage in such a way that: passage portions are formed at at least one of the left and right sides and the upper and lower sides of a pair of headlights within the duct, the passage portions being open to the front and constituting part of the air introduction passage, such that travelling winds flowing through the passage portions flow together behind the headlights.

According to this aspect of the present invention, the use of the LEDs as the sources of light makes it possible to reduce the size of the headlights, and the placement of such small headlights inside the air introduction passage in the duct makes it possible to cool the headlights with the travelling winds which pass through the air introduction passage. In addition, the supporting of the headlights by the duct means that specialized parts are no longer necessary to support the headlights, except for the duct.

Further, with this arrangement, the travelling winds flowing through the passage portions, each of which is formed among the duct, either of the left and right sides of each headlight, and at least one of the upper and lower sides of the headlight, flow together behind the headlights. Thus, a wider area of the outer surface of each headlight can be exposed to the travelling winds, and the headlight can be cooled more satisfactorily.

Preferably, the duct is supported by a front cowl which constitutes part of the vehicle body.

Thus, the headlights are not directly supported by the front cowl, while the duct is supported by the front cowl, and for this reason, the shape of the front cowl can be simplified.

Preferably, lenses in front portions of the headlights are formed such that the centres of the lenses project further forward than the sides of the lenses.

With this arrangement, the travelling winds cool the lens by hitting the lens, and then easily flow from the centre to the side of the lens due to the draw by the wind which flows along the inner surface of the duct at a high velocity.

In a further preferred form, the plurality of headlights are arranged laterally side by side within the air introduction passage, with a front end of the headlight which is closer to the lateral outside of the vehicle body located further rearward than a front end of the headlight which is closer to the lateral centre of the vehicle body.

With this arrangement, the velocity of the travelling winds can be maintained while improving the performance of cooling the headlights by guiding the travelling winds, which flow along the lens of the headlight closer to the centre of the vehicle body, to the headlight closer to the outside of the vehicle body.

Preferably, the headlights are located further rearward than points which are the points at which, in a plan view, straight lines extending longitudinally through the lateral centres of the two headlights intersect the front end of the duct.

Thus, it is possible to protect the lenses in the front portions of the headlights, by preventing foreign objects from coming into contact with the lenses.

Preferably, the headlights are supported by the duct with the assistance of a mesh member.

With this arrangement, the headlights can be supported satisfactorily while allowing the travelling winds to flow through the vicinity of the headlights.

In an alternative preferred form, the headlights are supported with the assistance of stays which are provided at a plurality of locations spaced out at intervals in a circumferential direction of the duct.

According to this arrangement, the stays are provided in multiple locations which are spaced out at intervals in the circumferential direction of the duct, and the headlights are supported by these stays. Thus, the headlights can be supported satisfactorily while allowing the travelling winds to flow in a wider area around each headlight.

Preferably, a single opening, at least part of which is located in a lateral centre portion of the vehicle body, is provided at a front cowl constituting part of the vehicle body, and a front end of a single duct is arranged to face the opening.

With this arrangement, the shape of the front cowl can be simplified.

Preferred embodiments of the invention will now be described by way of example only and with reference to the accompanying drawings, in which:
Fig. 1 is a front view of a motorcycle of a first embodiment;
Fig. 2 is a view of the motorcycle as viewed in a direction indicated by arrow 2 in Fig. 1;
Fig. 3 is a magnified view of a part of the motorcycle shown in Fig. 1;
Fig. 4 is a cross-sectional view of the motorcycle taken along the line 4-4 in Fig. 3;
Fig. 5 is a front view of a motorcycle of a second embodiment, corresponding to Fig. 3;
Fig. 6 is a front view of a motorcycle of a third embodiment;
Fig. 7 is a front view of a motorcycle of a fourth embodiment;
Fig. 8 is a front view of a motorcycle of a fifth embodiment;
Fig. 9 is a front view of a motorcycle of a sixth embodiment;
Fig. 10 is a front view of a motorcycle of a seventh embodiment;
Fig. 11 is a front view of a motorcycle of an eighth embodiment;
Fig. 12 is a side view of a motorcycle of a ninth embodiment;
Fig. 13 is a view of the motorcycle as viewed in a direction indicated by arrow 13 in Fig. 12; and
Fig. 14 is a perspective view of a rear portion of the motorcycle.

It should be noted that frontward, rearward, upward, downward, leftward and rightward and similar terms in the following description refer to the directions as viewed from a rider riding the motorcycle.

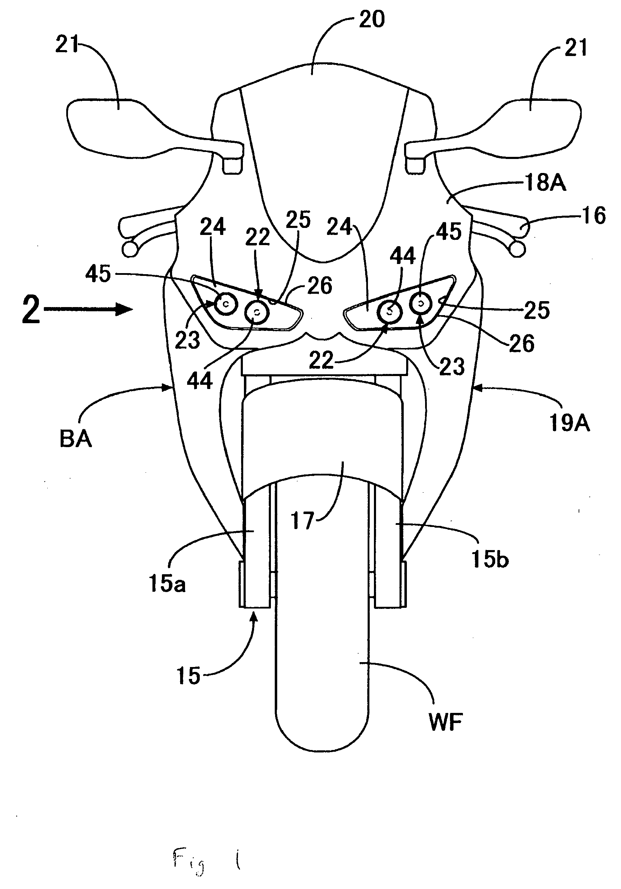

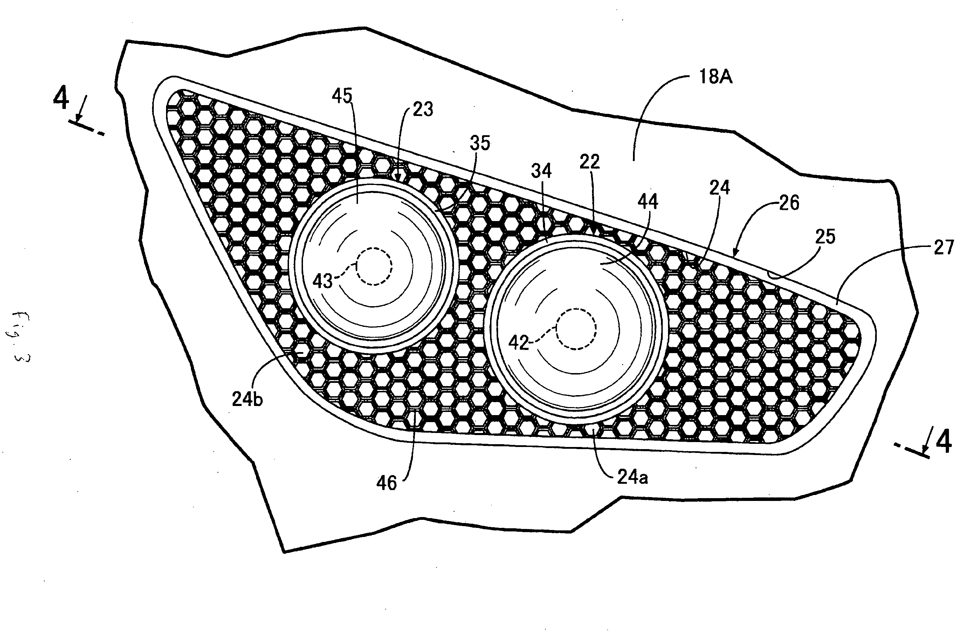

A first embodiment of the present invention will now be described with reference to Figs. 1 to 4. As shown in Fig. 1, a front fork 15 and a steering handlebar 16 are steerably supported by a front end of a vehicle body frame of a motorcycle which is a saddle-ride type vehicle. The front fork 15 includes paired left and right leg portions 15a, 15b which extend on the left and right sides of a front wheel WF, and whose lowermost end portions rotatably support the front wheel WF, respectively. The steering handlebar 16 is connected to the uppermost portion of the front fork 15. A front fender 17 for covering the front wheel WF from above is supported by the two leg portions 15a, 15b of the front fork 15.

A front cowl 18A for covering the front portion of the vehicle body frame constitutes part of a vehicle body cover 19A. The vehicle body cover 19A together with the vehicle body frame constitute a vehicle body BA. A windshield screen 20 is provided in the upper central portion of the front cowl 18A. Rear view mirrors 21, 21 are provided at the upper left and right portions of the front cowl 18A.

Two sets of paired headlights 22, 23 are provided, respectively, at the left and right sections of the front portion of the vehicle body BA. In addition, paired left and right air introduction passages 24 for introducing travelling winds rearward to an engine mounted on the vehicle body frame are provided at the front portion of the vehicle body BA, in such a way that the air introduction passages 24 are open toward the front.

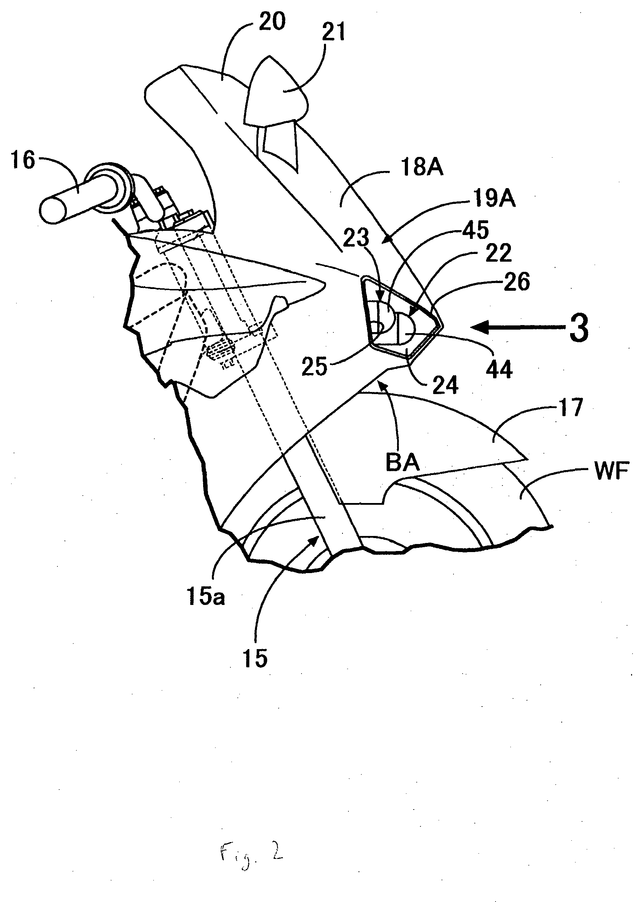

Referring now to Figs. 2 to 4, openings 25 are provided in the left and right sections of the front cowl 18A. Each opening 25 is formed such that it becomes higher in position toward the outer lateral side of the vehicle. The air introduction passages 24 are formed from ducts 26 whose front ends face the openings 25, and which extend rearward from the openings 25.

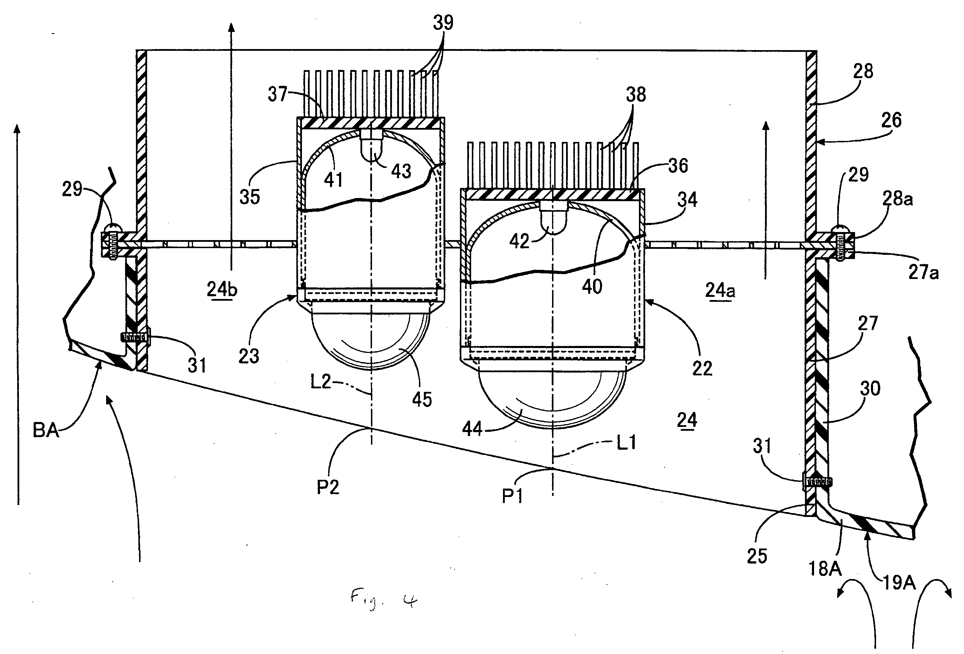

As clearly shown in Fig. 4, each duct 26 includes a front duct half body 27 and a rear duct half body 28, a front end portion of which is joined to a rear end portion of the front duct half body 27. The joining of the front duct half body 27 and the rear duct half body 28 is achieved, for example, by fastening together a flange portion 27a provided at the rear end portion of the front duct half body 27 and a flange portion 28a provided at the front end portion of the rear duct half body 28 with multiple screw members 29.

The front cowl 18A is integrally provided with a support cylindrical portion 30 which extends rearward while forming the corresponding opening 25. The front duct half body 27 is fitted into the support cylindrical portion 30, and is fastened to the support cylindrical portion 30 by use of screw members 31. Thus, the duct 26 is supported by the front cowl 18A which constitutes part of the vehicle body BA.

The paired headlights 22, 23 are located inside the air introduction passages 24 formed within the ducts 26, and are arranged side by side (as shown in Fig. 1). The headlights 22, 23 use LEDs 42, 43 as sources of light.

In addition, the paired headlights 22, 23 respectively include: cylindrical support cases 34, 35; base plates 36, 37; reflecting mirrors 40, 41; LEDs 42, 43; and lenses 44, 45. The axes of the respective cylindrical support cases 34, 35 are directed in the longitudinal direction. The base plates 36, 37 respectively include multiple heat radiation fins 38, 39 which protrude rearward, and are attached to the rear end portions of the support cases 34, 35 in such a way as to close the rear-end openings of the support cases 34, 35. The reflecting mirrors 40, 41 are each shaped like a bowl which is opened towards the front, and are fixedly located in the insides of the support cases 34, 35. The LEDs 42, 43 are located on front faces of the base plates 36, 37, and are positioned in the centre portions of the reflecting mirrors 40, 41. The lenses 44, 45 are attached to front end portions of the support cases 34, 35 in such a way as to close the front-end openings of the support cases 34,35.

The lenses 44, 45 located at the front portions of the headlights 22, 23 are projector lenses, which are formed in the shape of a forwardly convex curve such the centres of the lenses 44, 45 project further forward than the sides of the lenses 44, 45.

Each of the headlights 22, 23 is located inside the corresponding air introduction passage 24, and is supported by the corresponding duct 26. In this embodiment, each of the headlights 22, 23 are supported by the duct 26 with the assistance of a mesh member 46.

A peripheral portion of the mesh member 46 is held by and between the front duct half body 27 and the rear duct half body 28 which collectively constitute the duct 26. The peripheral portion of the mesh member 46 is held between the flange portion 27a of the front duct half body 27 and the flange portion 28a of the rear duct half portion 28. The support cases 34, 35 of the headlights 22, 23 are fixed to the mesh member 46 and pass through the mesh member 46.

While in the state of being supported by the duct 26 with the assistance of the mesh member 46, the paired headlights 22, 23 are located inside the air introduction passage 24 in such a way that a passage portion 24a is formed among the duct 26, the left side of the headlight 22, and at least one of the upper and lower sides of the headlight 22, and a passage portion 24b is formed among the duct 26, the right side of the headlight 23, and at least one of the upper and lower sides of the headlight 23. The passage portions 24a, 24b constitute part of the air introduction passage 24, and are open towards the front, and travelling winds flowing through the respective passage portions 24a, 24b flow together behind the headlights 22, 23. In the first embodiment, the passage portion 24a is formed among the duct 26, the left side of the headlight 22, and the upper and lower sides of the headlight 22, while the passage portion 24b is formed among the duct 26, the right side of the headlight 23, and the upper and lower sides of the headlight 23.

In addition, the paired headlights 22, 23 are arranged side by side inside the air introduction passage 24, while, as shown in Figs. 2 and 4, the front end of the headlight 23 closer to the lateral outside of the vehicle is situated further rearward than the front end of the headlight 22 closer to the lateral centre of the vehicle.

Furthermore, as shown in Fig. 4, the two headlights 22, 23 are located further rearward than points P1, P2, which are the points at which, in a plan view, straight lines L1, L2 extending longitudinally through the lateral centres of the two headlights 22, 23 intersect the front end of the duct 26.

In Fig. 4, the flows of travelling winds around the front portion of the vehicle body BA are represented by arrows which become longer as the velocities of the travelling winds increase. A travelling wind flowing in the air introduction passage 24 laterally outward of the headlight 23 is relatively fast due to draw by a travelling wind which flows along the side of the vehicle body BA (the side of the front cowl 18A) at a greater flow velocity. Meanwhile, a travelling wind flowing in the air introduction passage 24 laterally inward of the headlight 22 is relatively slow due to the air flow stagnation which takes place as a result of the travelling wind hitting the lateral centre portion of the vehicle body BA (the centre portion of the front cowl 18A).

Next, a description of how the first embodiment works will be provided. The headlights 22, 23 using the LEDs 42, 43 as the sources of light are located inside the air introduction passage 24 while supported by the duct 26 which forms the air introduction passage 24. The use of the LEDs 42, 43 as the sources of light makes it possible to reduce the size of the headlights 22, 23. The placement of the small headlights 22, 23 inside the air introduction passage 24 within the duct 26 enables the headlights 22, 23 to be cooled with the travelling wind which flows in the air introduction passage 24. Furthermore, the support of the headlights 22, 23 by the duct 26 makes specialized parts (except for the duct 26) no longer necessary for supporting the headlights 22, 23.

Moreover, the wider areas of the outer surfaces of the headlights 22, 23 can be exposed to the travelling winds, and the headlights 22, 23 can therefore be cooled satisfactorily, because the headlights 22, 23 are located inside the air introduction passage 24 in such a way that passage portions 24a, 24b are formed at least paired two opposite sides (in the case of the first embodiment, both pairs) out of the paired left and right sides and the paired upper and lower sides of the headlights 22, 23; that is, at at least one of the left and right sides and the upper and lower sides of the pair of headlights 22, 23 (in the case of the first embodiment, both pairs of sides). The passage portions 24a, 24b are opened to the front and form part of the air introduction passage 24, and the travelling winds flowing through the respective passage portions 24a, 24b flow together behind the headlights 22, 23.

Further, as the duct 26 is supported by the front cowl 18A (which forms part of the vehicle body BA), the shape of the front cowl 18A can be simplified with the headlights 22, 23 not being supported by the front cowl 18A.

In addition, since the lenses 44, 45 located at the front portions of the headlights 22, 23 are formed such that the centres of the lenses 44, 45 project further forward than the sides of the lenses 44, 45, the travelling winds cool the lenses 44, 45 by hitting the lenses 44, 45, and easily flow sideways from the centre portions of the lenses 44, 45 due to the draw by a travelling wind which flows along the inner surface of the duct 26 at a higher velocity.

Furthermore, since the paired headlights 22, 23 arranged laterally side by side are located inside the air introduction passage 24, with the front end of the headlight 23 closer to the lateral outside of the vehicle body situated further rearward than the front end of the headlight 22 closer to the lateral centre of the vehicle body, the flow velocity of the travelling wind can be maintained while improving the performance of cooling the headlights 22, 23, by guiding a travelling wind which flows along the lens 44 of the headlight 22 closer to the lateral centre of the vehicle body to the headlight 23 closer to the lateral outside of the vehicle body.

Furthermore, the headlights 22, 23 are located further rearward than points P1, P2, which are the points at which, in a plan view, straight lines L1, L2 extending longitudinally through the lateral centres of the two headlights 22, 23 intersect the front end of the duct 26. Thus, the lenses 44, 45 can be protected by the duct 26, which prevents foreign objects from coming into contact with the lenses 44, 45 in the front portions of the headlights 22, 23.

Moreover, since the headlights 22, 23 are supported by the duct 26 with the assistance of the mesh member 46, the headlights 22, 23 can be satisfactorily supported while allowing the travelling winds to flow through the vicinity of the headlights 22, 23.

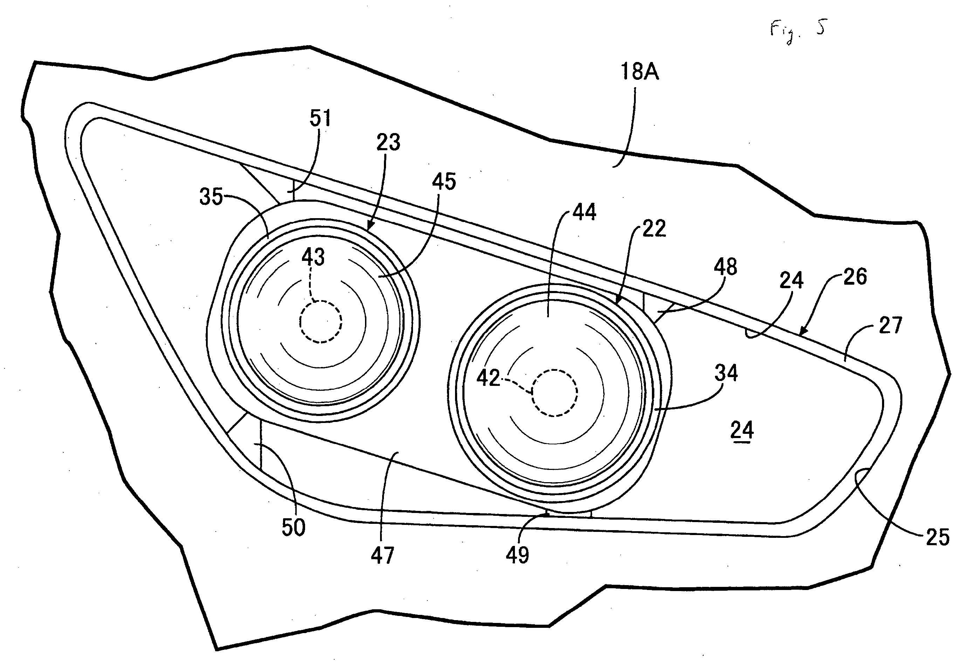

Referring to Fig. 5, a second embodiment of the present invention will now be described. Parts corresponding to those of the first embodiment shown in Figs. 1 to 4 will be denoted by the same reference numerals, and detailed descriptions of these parts will be omitted.

The air introduction passage 24 is formed inside the duct 26, the front end of which faces the opening 25 provided in the front cowl 18A, and which extends rearward from the opening 25. The paired headlights 22, 23 using LEDs 42, 43 as sources of light are located inside the air introduction passage 24 in a way that the headlights 22, 23 are arranged side by side. The paired headlights 22, 23 are supported in common by a single support plate 47.

Stays 48, 49, 50, 51 are provided in multiple locations, for example in four positions, which are spaced out in the circumferential direction of the duct 26. The support plate 47 is fixed to the stays 48 to 51. In other words, the headlights 22, 23 are supported by the stays 48 to 51, which are provided in four positions which are spaced out in the circumferential direction of the duct 26.

The second embodiment also enables the headlights 22, 23 to be satisfactorily supported while allowing travelling winds to flow in a wide area around the headlights 22, 23.

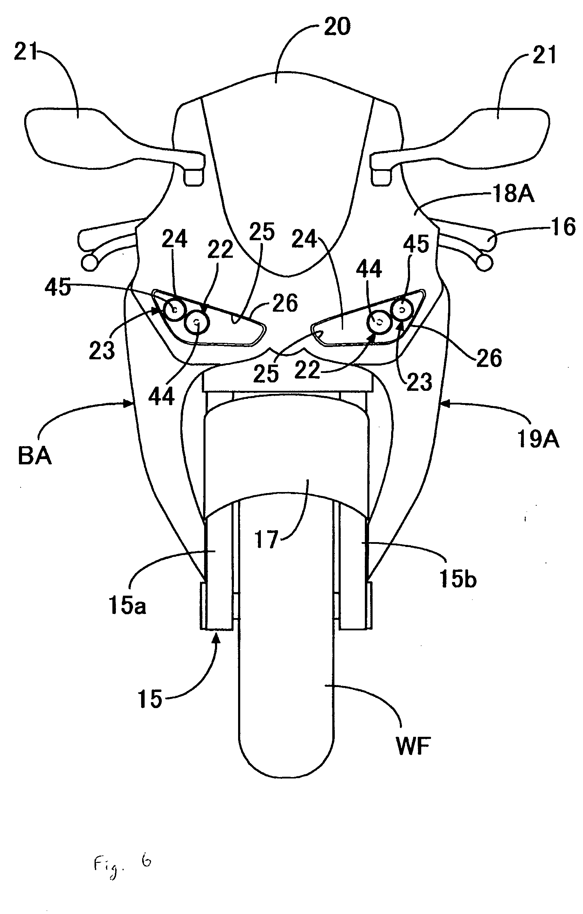

In a third embodiment of the present invention, shown in Fig. 6, travelling winds may be designed to efficiently flow through an area within each air introduction passage 24 which is closer to the lateral centre of the vehicle body, by locating the headlights 22, 23 in a location within the air introduction passage 24, which is closer to the lateral outside of the vehicle body.

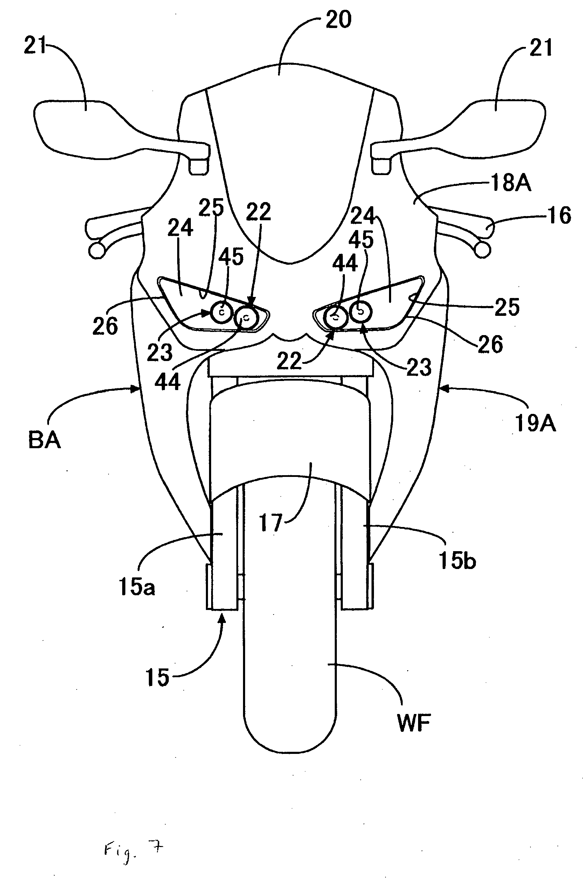

In a fourth embodiment of the present invention, shown in Fig. 7, travelling winds may be designed to efficiently flow through an area within each air introduction passage 24 which is closer to the lateral outside of the vehicle body, by locating the headlights 22, 23 in a location within the air introduction passage 24, which is closer to the lateral centre of the vehicle body.

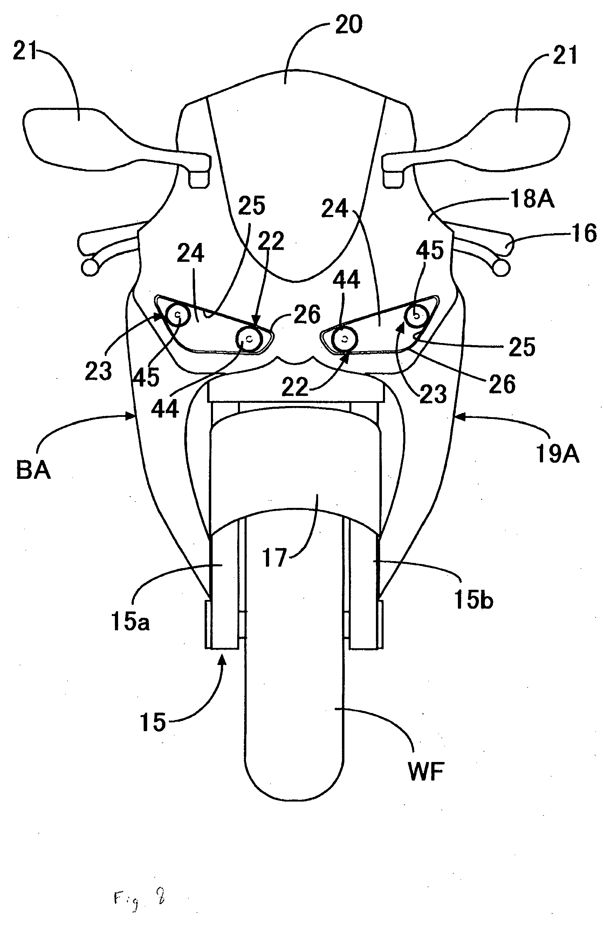

In a fifth embodiment of the present invention, shown in Fig. 8, travelling winds may be designed to efficiently flow through the lateral centre portion of each air introduction passage 24, by separately locating the headlight 22 in a location within the air introduction passage 24 which is closer to the lateral centre of the vehicle body, and the headlight 23 in a location within the air introduction passage 24, which is closer to the lateral outside of the vehicle body.

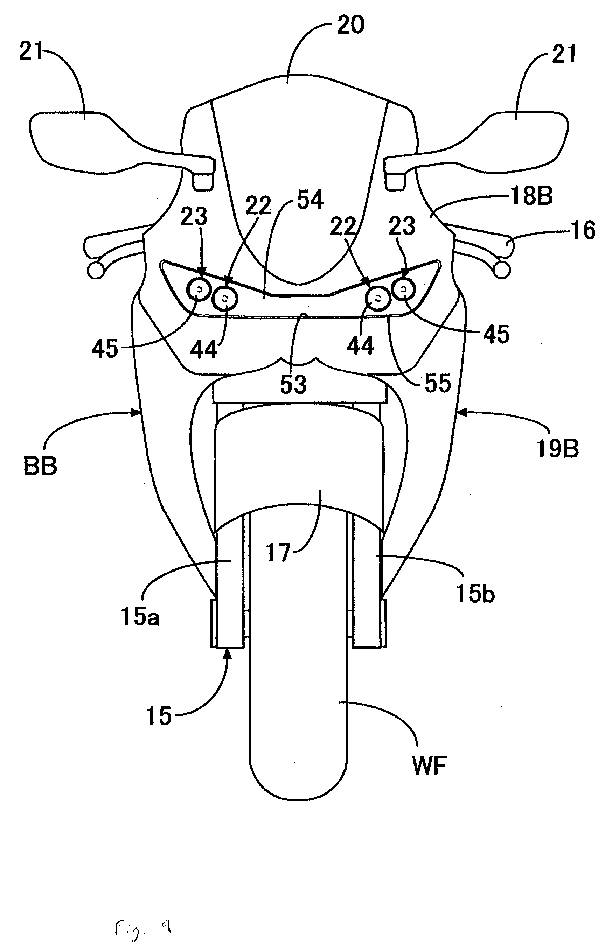

Referring to Fig. 9, a sixth embodiment of the present invention will now be described. Parts corresponding to those of the foregoing embodiments will be denoted by the same reference numerals and detailed descriptions of these parts will be omitted.

A vehicle body cover 19B, whose part is formed from a front cowl 18B, constitutes a vehicle body BB together with the vehicle body frame. A single opening 53, at least part of which is located in the lateral centre portion of the vehicle body, is provided in the front cowl 18B. This opening 53 is formed so as to extending leftward and rightward from the lateral centre portion of the vehicle body.

An air introduction passage 54, which is configured to introduce travelling winds rearward and is open towards the front, is formed from a duct 55 supported by the front cowl 18B. The front end of this single duct 55 is arranged to face the opening 53.

Two sets of paired headlights 22, 23 are located in the respective left and right areas within the air introduction passage 54, with each pair of headlights 22, 23 arranged side by side. The headlights 22, 23 are supported by the duct 55.

The sixth embodiment makes it possible to simplify the shape of the front cowl 18B.

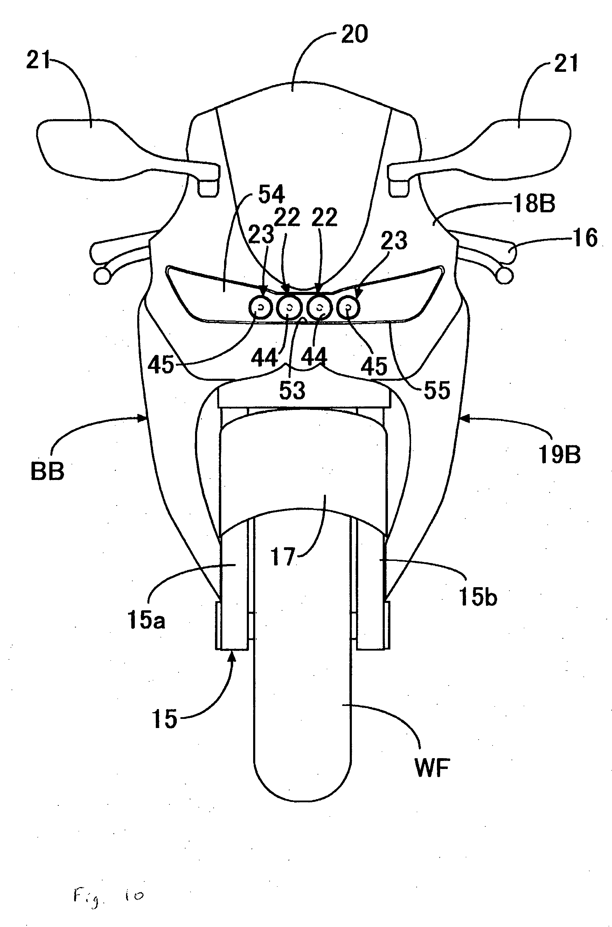

In a seventh embodiment of the present invention, shown in Fig. 10, two sets of paired headlights 22, 23 arranged side by side may be located in the lateral centre portion of the air introduction passage 54.

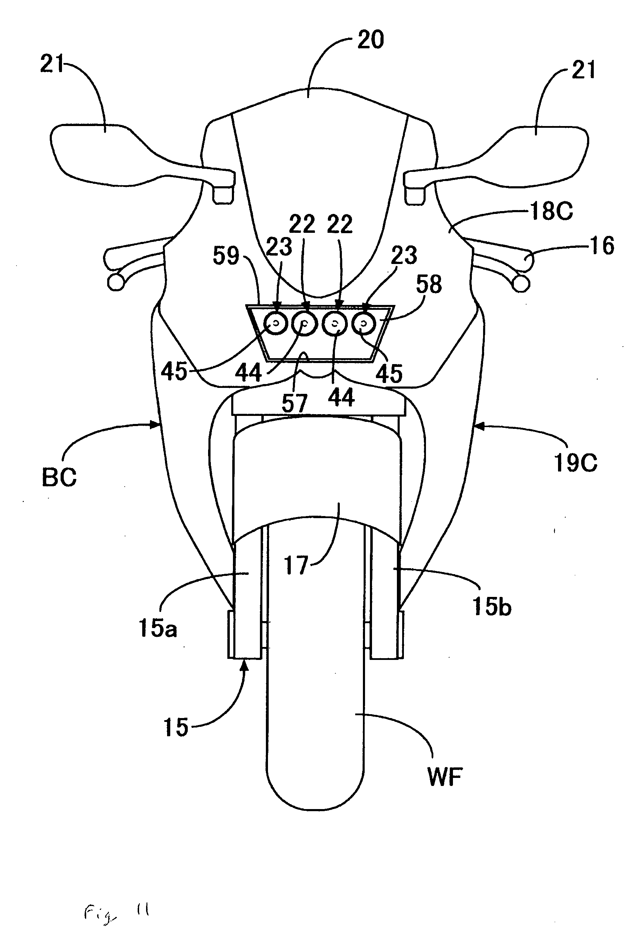

Referring to Fig. 11, an eighth embodiment of the present invention will now be described. Parts corresponding to those of the foregoing embodiments will be denoted by the same reference numerals and detailed descriptions of these parts will be omitted.

A vehicle body cover 19C, whose part is formed from a front cowl 18C, constitutes a vehicle body BC together with the vehicle body frame. A single opening 57, at least part of which is located in the lateral centre portion of the vehicle body, is provided in the front cowl 18C. In the eighth embodiment, the opening 57 is located in the lateral centre portion of the vehicle body.

An air introduction passage 58, which is configured to introduce travelling winds rearward and is open towards the front, is formed from a duct 59 supported by the front cowl 18C. The front end of this single duct 59 is arranged to face the opening 57.

Two sets of paired headlights 22, 23 are located in the upper area within the air introduction passage 58, such that each pair of headlights 22, 23 is arranged side by side. The headlights 22, 23 are supported by the duct 59.

The eighth embodiment can bring about the same effects as the sixth and seventh embodiments.

As a modification of the eighth embodiment, the two sets of paired headlights 22, 23 may be located in the lower area within the air introduction passage 58, with each pair of headlights 22, 23 arranged side by side.

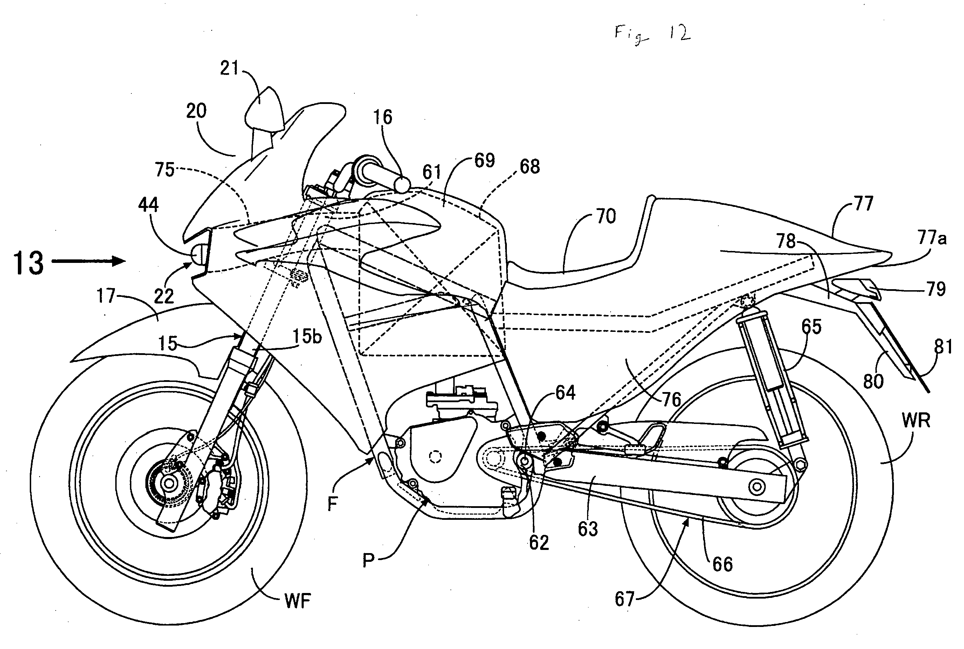

Referring to Figs. 12 to 14, a ninth embodiment of the present invention will now be described. Parts corresponding to those of the foregoing embodiments will be denoted by the same reference numerals and detailed descriptions of these parts will be omitted.

First, as shown in Fig. 12, the front fork 15 and the steering handlebar 16 are steerably supported by a head pipe 61 provided on a front end of a vehicle body frame F of an electric motorcycle as a saddle-ride type vehicle. A front end portion of a swing arm 63 is swingably supported by a bracket 62, which is provided in the lower portion of the longitudinal centre portion of the vehicle body frame F, with the assistance of a pivot 64, and the rear end of the swing arm 63 rotatably supports a rear wheel WR. A rear cushion unit 65 is provided between the rear portion of the vehicle body frame F and the rear portion of the swing arm 63.

An electric power unit P is mounted on the vehicle body frame F between the front wheel WF and the rear wheel WR. The drive force from this electric power unit P is transmitted to the rear wheel WR through a chain-type transmission mechanism 67 which uses an endless chain 66.

A battery box 68, which houses a battery configured to supply electric power to the electric power unit P, is mounted on the vehicle body frame F such that the battery box 68 is situated above the electric power unit P. This battery box 68 is covered from above with a cover 69. In addition, a rider's seat 70, located behind the battery box 68, is supported by the rear portion of the vehicle body frame F.

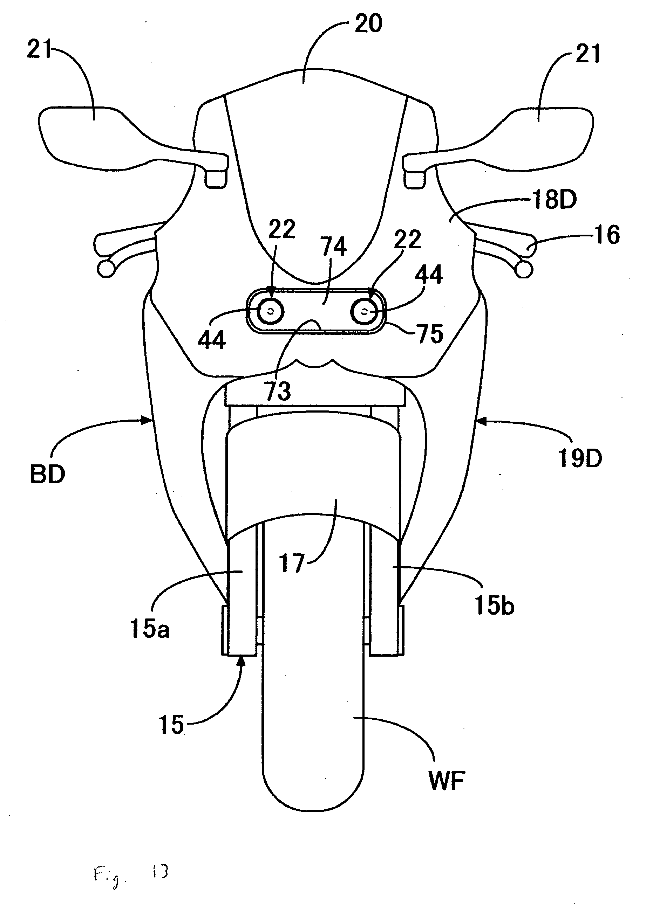

Referring also to Fig. 13, a vehicle body cover 19D, whose part is formed from a front cowl 18D covering the front end portion of the vehicle body frame F from the front, constitutes a vehicle body BD together with the vehicle body frame. A single opening 73, at least part of which is located in the lateral centre portion of the vehicle body, is provided in the front cowl 18D. This opening 73 extends laterally and is located in the lateral centre portion of the front cowl 18D.

An air introduction passage 74, which is configured to introduce travelling winds rearward and is open towards the front, is formed from a duct 75 supported by the front cowl 18D. The front end of this single duct 75 is arranged to face the opening 73. As shown in Fig. 12, the rear end of the duct 75 is connected to the battery box 68 in order to cool the battery.

Headlights 22, 22 are located in the respective left and right areas within the air introduction passage 64. The headlights 22, 22 are supported by the duct 75.

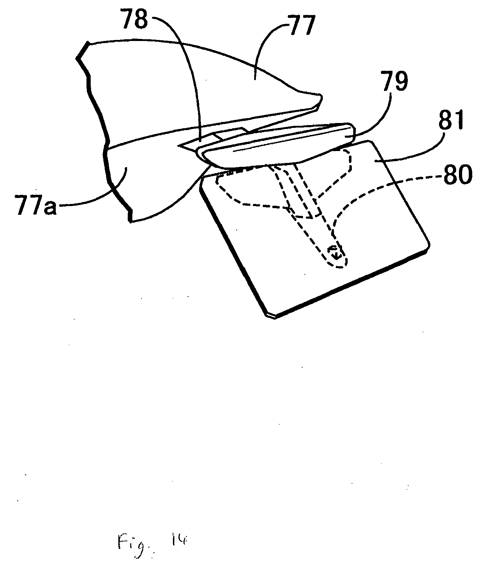

Referring also to Fig. 14, a rear fender 77 which covers the rear wheel WR from above is integrally continuously provided at a rear cover 76, which constitutes part of the vehicle body cover 19D and which covers the rear portion of the vehicle body frame F. In addition, in order to smoothly discharge travelling winds rearward, the rear fender 77 has a streamlined shape, in which a lower surface 77a increases in height toward the rear end and the vertical width of the rear fender 77 decreases toward the rear end.

A tail light 79 is located under the rear fender 77, and is supported by a stay 78 which extends rearwardly and downwardly from the rear fender 77. This tail light 79 uses an LED as the source of light, and is formed so as to be laterally elongated. The stay 78 is also provided with a license plate stay 80, which is situated under the tail light 79. A license plate 81 is fixed to the license plate stay 80.

The ninth embodiment brings about the same effects as the sixth to eighth embodiments.

Although the foregoing descriptions have been provided for specific embodiments of the present invention, the present invention is not limited to these embodiments. Various changes in the design can be made without departing from the scope of claims.

Although the foregoing embodiments have referred to a motorcycle, the present invention is applicable to a wide range of saddle-ride type vehicles, and can be used on three-wheeled motorcycles and the like.

## Claims

1. A front structure of a saddle-ride type vehicle provided with headlights (22, 23) and an air introduction passage (24, 54, 58, 74) in a front portion of a vehicle body (BA, BB, BC, BD), the air introduction passage (24, 54, 58, 74) being open to the front and configured to introduce travelling winds rearward, wherein
the headlights (22, 23) using LEDs (42, 43) as their respective sources of light are located inside the air introduction passage (24, 54, 58, 74) and are supported by a duct (26, 55, 59, 75) which forms the air introduction passage (24, 54, 58, 74);
**characterized in that** the headlights (22, 23) are located inside the air introduction passage (24, 54, 58, 74) in such a way that: passage portions (24a, 24b) are formed at at least one of the left and right sides and the upper and lower sides of a pair of headlights (22, 23) within the duct (26, 55, 59, 75), the passage portions (24a, 24b) being open to the front and constituting part of the air introduction passage (24, 54, 58, 74), such that travelling winds flowing through the passage portions (24a, 24b) flow together behind the headlights (22, 23).

2. The front structure of the saddle-ride type vehicle of claim 1, wherein
the duct (26, 55, 59, 75) is supported by a front cowl (18A, 18B, 18C, 18D) which constitutes part of the vehicle body (BA, BB, BC, BD).

3. The front structure of the saddle-ride type vehicle of claim 1 or claim 2, wherein
lenses (44, 45) in front portions of the headlights (22, 23) are formed such that makes the centres of the lenses (44, 45) project further forward than the sides of the lenses (44, 45).

4. The front structure of the saddle-ride type vehicle of claim 3, wherein
the plurality of headlights (22, 23) are arranged laterally side by side within
the air introduction passage (24, 54, 58), with a front end of the headlight (23) which is closer to the lateral outside of the vehicle body located further rearward than a front end of the headlight (22) which is closer to the lateral centre of the vehicle body.

5. The front structure of the saddle-ride type vehicle of any one of claims 1 to 4, wherein
the headlights (22, 23) are located further rearward than points (P1, P2) which are the points at which, in a plan view, straight lines (L1, L2) extending longitudinally through the lateral centres of the two headlights (22, 23) intersect the front end of the duct (26, 55, 59, 75).

6. The front structure of the saddle-ride type vehicle of any one of claims 1 to 5, wherein
the headlights (22, 23) are supported by the duct (26) with the assistance of a mesh member (46).

7. The front structure of the saddle-ride type vehicle of any one of claims 1 to 5, wherein
the headlights (22, 23) are supported with the assistance of stays (48, 49, 50, 51) which are provided at a plurality of locations spaced out at intervals in a circumferential direction of the duct (26).

8. The front structure of the saddle-ride type vehicle of any one of claims 1 to 7, wherein
a single opening (53, 57, 73), at least part of which is located in a lateral centre portion of the vehicle body, is provided at a front cowl (18B, 18C, 18D) constituting part of the vehicle body (BB, BC, BD), and
a front end of a single duct (55, 59, 75) is arranged to face the opening (53, 57, 73).

## Patentansprüche

1. Eine Vorderstruktur eines Fahrzeugs vom Sattelfahrtyp, bereitgestellt mit Scheinwerfern (22, 23) und einem Lufteinbringdurchgang (24, 54, 58, 74) in einem Vorderbereich einer Karosserie (BA, BB, BC, BD), welcher Lufteinführdurchgang (24, 54, 58, 74) nach vorne hin offen und eingerichtet ist, um Fahrtwinde nach hinten einzubringen, wobei
die Scheinwerfer (22, 23), die LEDs (42, 43) als ihre jeweilige Lichtquelle verwenden, sich in dem Lufteinbringdurchgang (24, 54, 58, 74) befinden und von einem Kanal (26, 55, 59, 75) gelagert werden, der den Lufteinbringdurchgang (24, 54, 58, 74) bildet;
**dadurch gekennzeichnet, dass** die Scheinwerfer (22, 23) sich auf eine solche Weise in dem Lufteinbringdurchgang (24, 54, 58, 74) befinden, dass : Durchgangsbereiche (24a, 24b) auf mindestens einer der linken und rechten Seiten und der oberen und unteren Seiten eines Paares von Scheinwerfern (22, 23) in dem Kanal (26, 55, 59, 75) gebildet werden, welche Durchgangsbereiche (24a, 24b) nach vorne hin offen sind und einen Teil des Lufteinbringdurchgangs (24, 54, 58, 74) ausmachen, so dass Fahrtwinde, die durch die Durchgangsbereiche (24a, 24b) strömen, hinter den Scheinwerfern (22, 23) zusammenströmen.

2. Die Vorderstruktur eines Fahrzeugs vom Sattelfahrtyp nach Anspruch 1, wobei der Kanal (26, 55, 59, 75) von einer vorderen Haube (18A, 18B, 18C, 18D) gelagert wird, welche einen Teil der Karosserie (BA, BB, BC, BD) ausmacht.

3. Die Vorderstruktur eines Fahrzeugs vom Sattelfahrtyp nach Anspruch 1 oder Anspruch 2, wobei Linsen (44, 45) in Vorderbereichen der Scheinwerfer (22, 23) derart gebildet sind, dass die Mitten der Linsen (44, 45) weiter projizieren als die Seiten der Linsen (44, 45).

4. Die Vorderstruktur eines Fahrzeugs vom Sattelfahrtyp nach Anspruch 3, wobei die Mehrzahl von Scheinwerfern (22, 23) lateral Seite an Seite innerhalb des Lufteinbringdurchgangs (24, 54, 58) angeordnet sind, wobei ein vorderes Ende des Scheinwerfers (23), das der lateralen Außenseite der Karosserie näher ist, sich weiter hinten befindet als ein vorderes Ende des Scheinwerfers (22), das der lateralen Mitte der Karosserie näher ist.

5. Die Vorderstruktur eines Fahrzeugs vom Sattelfahrtyp nach einem der Ansprüche 1 bis 4, wobei die Scheinwerfer (22, 23) sich weiter hinten befinden, als Punkte (P1, P2), welches Punkte sind, an denen in der Draufsicht gerade Linien (L1, L2), die sich längs durch die lateralen Mitten der zwei Scheinwerfer (22, 23) erstrecken, das vordere Ende des Kanals (26, 55, 59, 75) schneiden.

6. Die Vorderstruktur eines Fahrzeugs vom Sattelfahrtyp nach einem der Ansprüche 1 bis 5, wobei die Scheinwerfer (22, 23) von dem Kanal (26) mit der Unterstützung eines Maschenelements (46) gelagert werden.

7. Die Vorderstruktur eines Fahrzeugs vom Sattelfahrtyp nach einem der Ansprüche 1 bis 5, wobei die Scheinwerfer (22, 23) mit der Unterstützung von Halterungen (48, 49, 50, 51) gelagert werden, die an einer Mehrzahl von Stellen in Intervallen beabstandet in einer umlaufenden Richtung des Kanals (26) bereitgestellt sind.

8. Die Vorderstruktur eines Fahrzeugs vom Sattelfahrtyp nach einem der Ansprüche 1 bis 7, wobei
eine einzelne Öffnung (53, 57, 73), von der sich mindestens ein Teil in einer lateralen Mittelposition der Karosserie befindet, in einer vorderen Haube (18B, 18C, 18D) bereitgestellt ist, welche einen Teil der Karosserie (BB, BC, BD) ausmacht, und
ein vorderes Ende eines einzelnen Kanals (55, 59, 75) angeordnet ist, um zur der Öffnung (53, 57, 73) zu zeigen.

## Revendications

1. Structure avant d'un véhicule de type à selle muni de phares (22, 23) et d'un passage d'introduction d'air (24, 54, 58, 74) dans une partie avant d'une carrosserie de véhicule (BA, BB, BC, BD), le passage d'introduction d'air (24, 54, 58, 74) étant ouvert vers l'avant et configuré pour introduire des vents progressifs vers l'arrière, dans laquelle
les phares (22, 23) utilisant des LED (42, 43) comme sources de lumière respectives sont situés à l'intérieur du passage d'introduction d'air (24, 54, 58, 74) et sont supportés par un conduit (26, 55, 59, 75) qui forme le passage d'introduction d'air (24, 54, 58, 74) ;
**caractérisée en ce que** les phares (22, 23) sont situés à l'intérieur du passage d'introduction d'air (24, 54, 58, 74) d'une telle façon que : des parties de passage (24a, 24b) sont formées au moins au niveau d'un des côtés de gauche et de droite et des côtés inférieur et supérieur d'un couple de phares (22, 23) à l'intérieur du conduit (26, 55, 59, 75), les parties de passage (24a, 24b) étant ouvertes vers l'avant et constituant une partie du passage d'introduction d'air (24, 54, 58, 74), de sorte que des vents progressifs s'écoulant à travers les parties de passage (24a, 24b) s'écoulent ensemble derrière les phares (22, 23).

2. Structure avant du véhicule de type à selle selon la revendication 1, dans laquelle
le conduit (26, 55, 59, 75) est supporté par un capot avant (18A, 18B, 18C, 18D) qui constitue une partie de la carrosserie de véhicule (BA, BB, BC, BD).

3. Structure avant du véhicule de type à selle selon la revendication 1 ou la revendication 2, dans laquelle
des optiques (44, 45) dans des parties avant des phares (22, 23) sont formées de façon à faire en sorte que les centres des optiques (44, 45) projettent davantage vers l'avant que sur les côtés des optiques (44, 45).

4. Structure avant du véhicule de type à selle selon la revendication 3, dans laquelle
la pluralité de phares (22, 23) est agencée latéralement côte à côte à l'intérieur du passage d'introduction d'air (24, 54, 58), avec une extrémité avant du phare (23) qui est plus proche de l'extérieur latéral de la carrosserie de véhicule située davantage vers l'arrière qu'une extrémité avant du phare (22) qui est plus proche du centre latéral de la carrosserie de véhicule.

5. Structure avant du véhicule de type à selle selon l'une quelconque des revendications 1 à 4, dans laquelle
les phares (22, 23) sont situés davantage vers l'arrière que des points (P1, P2) qui sont les points au niveau desquels, dans une vue en plan, des lignes droites (L1, L2) s'étendant longitudinalement par les centres latéraux des deux phares (22, 23) croisent l'extrémité avant du conduit (26, 55, 59, 75).

6. Structure avant du véhicule de type à selle selon l'une quelconque des revendications 1 à 5, dans laquelle
les phares (22, 23) sont supportés par le conduit (26) à l'aide d'un élément à mailles (46).

7. Structure avant du véhicule de type à selle selon l'une quelconque des revendications 1 à 5, dans laquelle
les phares (22, 23) sont supportés à l'aide d'étais (48, 49, 50, 51) qui sont prévus au niveau d'une pluralité d'emplacements espacés à des intervalles dans une direction circonférentielle du conduit (26).

8. Structure avant du véhicule de type à selle selon l'une quelconque des revendications 1 à 7, dans laquelle
une ouverture simple (53, 57, 73), dont au moins une partie est située dans une partie centrale latérale de la carrosserie de véhicule, est prévue au niveau d'un capot avant (18B, 18C, 18D) constituant une partie de la carrosserie de véhicule (BB, BC, BD), et
une extrémité avant d'un conduit simple (55, 59, 75) est agencée pour faire face à l'ouverture (53, 57, 73).
